# EUROPÄISCHE PATENTSCHRIFT

(11) **EP 0 471 677 B1**
(45) Veröffentlichungstag und Bekanntmachung des Hinweises auf die Patenterteilung: **03.11.1993**
(21) Anmeldenummer: 90905425.6
(22) Anmeldetag: 05.04.1990
(51) Int. Cl.: H04Q 11/04, H04K 1/00

(54) **NACHRICHTENÜBERTRAGUNGSSYSTEM**
AN INFORMATION TRANSMISSION SYSTEM
SYSTEME DE TRANSMISSION D'INFORMATIONS

(30) Priorität: 08.05.1989 DE 3915043
(43) Veröffentlichungstag der Anmeldung: 26.02.1992
(73) Patentinhaber: SIEMENS AKTIENGESELLSCHAFT, 80333 München (DE)
(72) Erfinder: OBERMEIER, Siegfried, D-8000 München 71 (DE)
(86) Internationale Anmeldenummer: DE9000269
(87) Internationale Veröffentlichungsnummer: WO9013985

(56) Entgegenhaltungen:
- DE-A- 3 033 871
- 1986 IEEE Military Communications Conference, MILCOM '86, 5-9 Octo- ber 1986, Monterey, US; vol. 3, IEEE, New York, US; pages 5061-5067; H.F. Najjar: "Application of ISDN to interconnect heterogeneous switched net- works"
- Telcom Report, Sonderheft "Diensteintegrierendes Digitalnetz ISDN", no. 8, February 1985, Passau, DE; pages 26-30; O. Fundneider: "Teilnehmersigna-lisierung Phi D-Kanal Ita"

## Beschreibung

Die Erfindung betrifft ein Nachrichtenübertragungsübertragungssystem gemäß dem Oberbegriff des Patentanspruchs 1, sowie daran angepaßte Übergangsstellen.

Ein solches System ist aus der DE-OS 30 33 871 bekannt. Dieses Nachrichtenübertragungssystem besteht aus einem ersten Teilnehmernetz, in dem die Sprachaufbereitung mit Pulscodemodulation durchgeführt wird, und aus einem zweiten Teilnehmernetz, in dem die Sprachaufbereitung mit Deltamodulation durchgeführt wird. Die Teilnehmer der Netze sind über eine Übergangsstelle hinweg miteinander verbindbar, wobei in der Übergangsstelle ein Signalisierungsumsetzer vorgesehen ist. Die mit einem Kryptogenerator ausgerüsteten Teilnehmerendgeräte des ersten Netzes weisen zusätzlich eine dem zweiten Netz entsprechende Deltamodulationseinrichtung zur Sprachaufbereitung auf.

Der Erfindung liegt die Aufgabe zugrunde, ein Nachrichtenübertragungssystem bzw. Übergangsstellen der eingangs genannten Art anzugeben, bei dem Netze mit verschiedenen Bitraten auf einfache Weise verbindbar sind.

Diese Aufgabe wird erfindungsgemäß durch die im Anspruch 1, 5 oder 6 angegebenen Merkmale gelöst.

Ein großer Vorteil des erfindungsgemäßen Nachrichtenübertragungssystems besteht darin, daß auch verschlüsselte Nachrichten zwischen Teilnehmern verschiedener Netze ausgetauscht werden können, ohne daß in der Übergangsstelle die Nachricht im Klartext auftaucht.

Ein weiterer Vorteil besteht darin, daß bei dem erfindungsgemäßen Nachrichtenübertragungssystem die bestehenden Netze nicht geändert werden mussen.

Ebenso müssen in den entsprechenden Netzen (Eurocom-Netz und IVSN-Nato-Netz) keines der Teilnehmerendgerräte verändert werden.

Eine Ausdehnung des erfindungsgemäßen Nachrichtenübertragungssystems auf weitere digitale oder analoge Netze ist ohne weiteres möglich.

Im folgenden wird die Erfindung anhand eines in der Zeichnung dargestellten Ausführungsbeispieles erläutert.

Dabei zeigen
- Fig. 1: ein aus drei Teilnehmernetzen bestehendes Nachrichten- übertragungssystem,
- Fig. 2: die erfindungsgemäße Teilnehmerendeinrichtung,
- Fig. 3: ein Ablaufdiagramm zur Erlauterung der Wirkungsweise des Teilnehmerendgerätes,
- Fig. 4: die erfindungsgemäße Übergangsstelle zwischen PCM und deltamoduliertem Netz,
- Fig. 5: die erfindungsgemäße Überleitstelle zwischen PCM und analogem Netz, und
- Fig. 6: ein Impulsdiagramm zur Erläuterung des Übertragungsverfahrens im PCM-Netz.

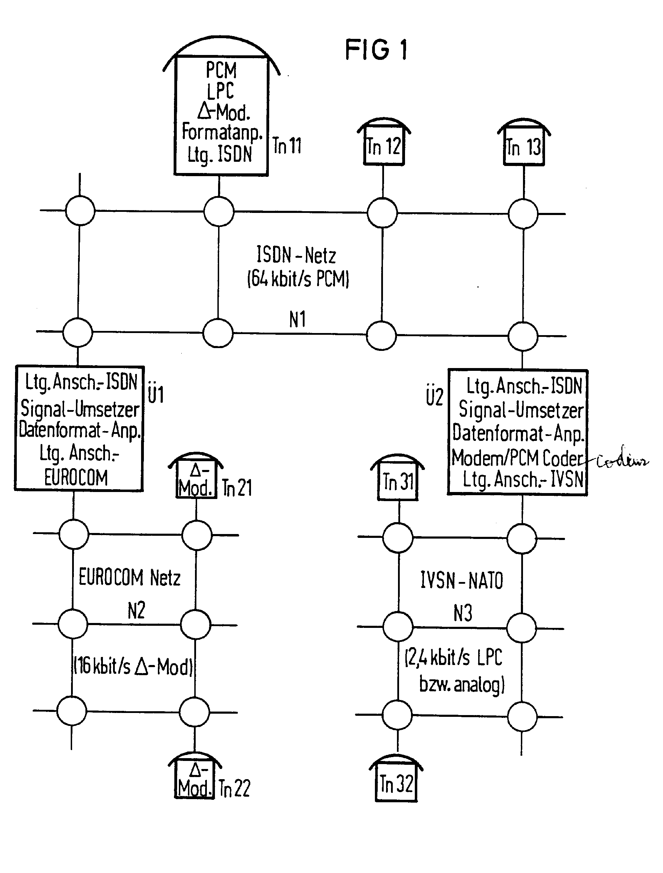

In Fig. 1 sind drei Teilnehmernetze dargestellt:
Ein erstes Netz N1, ein sogenanntes ISDN-Netz, in dem die Datenübertragung mit einer Bitrate von 64 kbit pro Sekunde durchgeführt wird. Zur Sprachaufbereitung, d.h. zur Digitalisierung des analogen Sprachsignals bzw. in umgekehrter Richtung zur Analogisierung des ankommenden digitalen Sprachsignals wird in den Teilnehmerendgeräten Tn11, 12, ... die Pulscodemodulation verwendet.

Ein zweites Netz N2, ein sogenanntes Eurocom-Netz, in dem die Datenübertragung mit einer Bitrate von 16 kbit pro Sekunde durchgeführt wird. Zur Sprachaufbereitung in den Teilnehmerendgeräten Tn21, 22 wird die Deltamodulation verwendet.

Ein drittes Netz N3, ein sogenanntes IVSN-Natonetz. Es handelt sich hierbei um ein analoges Netz, in dem das Sprachsignal analog zwischen den Teilnehmerendgeräten Tn31, 32 übertragen wird. Bei Verwendung von sogenannten Vocodern zur Sprachaufbe- reitung in den Teilnehmerendgeräten Tn31, 32 wird das digitalisierte Sprachsignal mit einer Übertragungsrate von 2,4 kbit pro Sekunde anstelle des analogen Sprachsignals übertragen.

In allen Netzen N1, N2, N3 werden die digitalen Sprachsignale normalerweise im Klartext, bei Verwendung von Kryptogeneratoren in ausgewählten Teilnehmerendgeräten auch verschlüsselt übertragen.

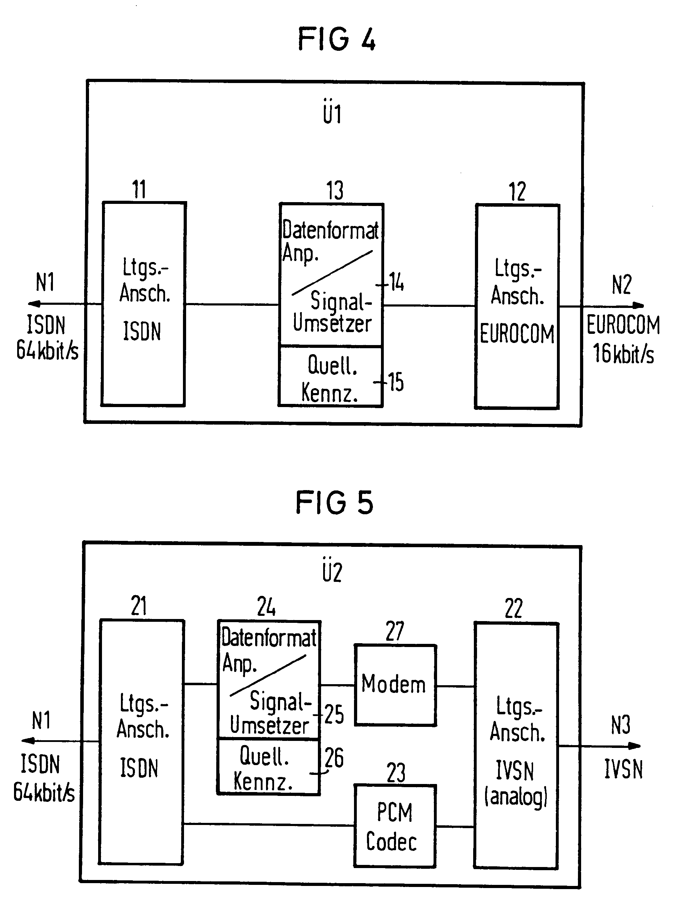

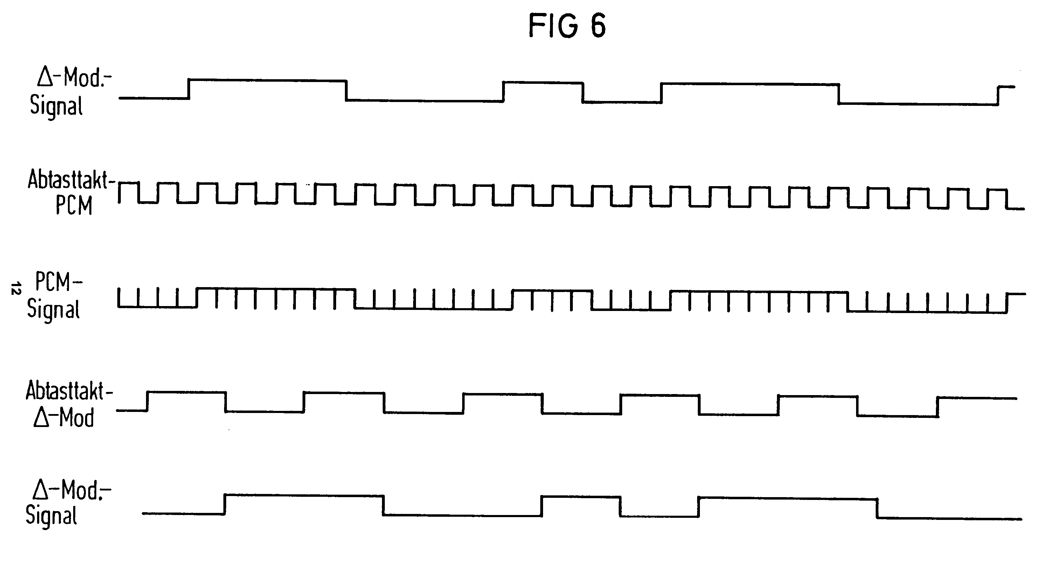

Zur Verbindung der Netze N1 bis N3 werden zwei Übergangsstellen Ü1, Ü2 verwendet. Die erste Übergangsstelle Ü1 ist zwischen das erste N1 und das zweite Netz N2 geschaltet, und die zweite Übergangsstelle Ü2 ist zwischen das erste Netze N1 und das dritte Netz N3 geschaltet. Die Übergangsstellen Ü1 und Ü2 werden später anhand der Figuren 4 und 5 genauer erläutert.

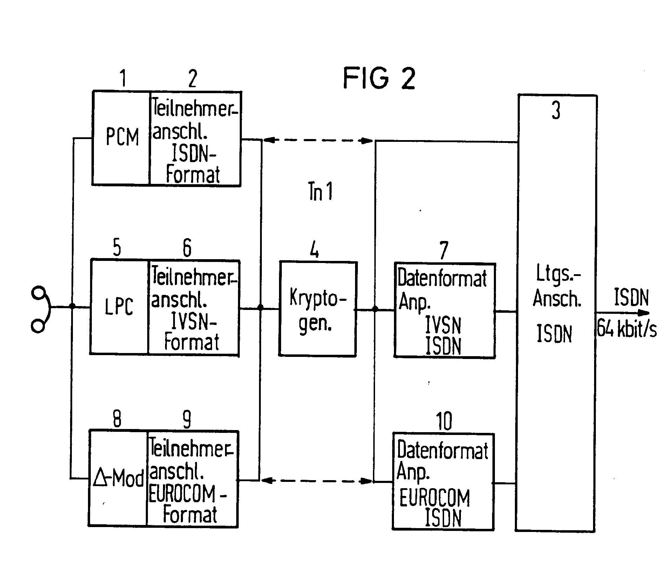

In Fig. 2 ist ein Teilnehmerendgerät Tn1 für ein ISDN-Netz (erstes Netz N1) dargestellt. Hierzu weist es eine mit Pulscodemodulation arbeitende Sprachaufbereitung 1 auf, eine Teilnehmeranschlußeinrichtung 2 für das ISDN-Format, und eine Leitungsanschlußeinrichtung 3 gemäß dem ISDN-Übertragungsprotokoll auf. Zusätzlich enthält das Teilnehmerendgeräte Tn1 einen Kryptogenerator 4 zur Verschlüsselung des digitalen Sprachsignals.

Erfindungsgemäß weist das Teilnehmerendgerät Tn1 zusätzliche, an das zweite Netz N2 (Eurocom-Netz) angepaßte Einrichtungen auf. Dies sind eine mit der Deltamodulation (16 kbit/sec) arbeitende Sprachaufbereitungseinrichtung 8, eine Teilnehmeranschlußeinrichtung 9 gemäß dem Eurocom-Format, sowie eine Datenformatanpaßeinrichtung 10 zur Umsetzung des gemäß dem Eurocom-Format digitalisierten Sprachsignals in ein gemäß dem ISDN-Protokoll digitalisiertes Sprachsignal.

Erfindungsgemäß weist das Teilnehmerendgerät Tn1 weitere zusätzliche an das dritte Netz N3 (IVSN-Natonetz) angepaßte Einrichtungen auf. Dies sind ein LPC-Vocoder 5 (2,4 kbit/sec) zur Sprachaufbereitung, eine Teilnehmeranschlußeinrichtung 6 zur Anpassung an das IVSN-Format, sowie eine Datenformatanpaßeinrichtung 7 zur Umsetzung des gemäß dem IVSN-Protokoll digitalisierten Sprachsignals in ein gemäß dem ISDN-Protokoll digitalisiertes Sprachsignal.

Im Teilnehmerendgerät Tn1 wird also das analoge Sprachsignal mit drei verschiedenen Verfahren digitalisiert und an das erste Netz N1 abgegeben. Es wird hierbei immer diejenige der Sprachaufbereitungseinrichtungen 1, 5, 8 eingeschaltet, die dem Netz entspricht, in dem der gerufene Teilnehmer sitzt. Ebenso kann jedes der Sprachsignale über den Kryptogenerator 4 verschlüsselt werden. Der Kryptogenerator 4 wird in seiner Bitrate auf die Bitrate der eingeschalteten Sprachaufbereitungseinrichtung 1, 5, 8 angepaßt und ist der der Sprachdigitalisierung (Delta-Modulator 8, LPC-Vocoder 5) mit zugehöriger Teilnehmeranschlußeinrichtung 6, 9 direkt nachgeschaltet.

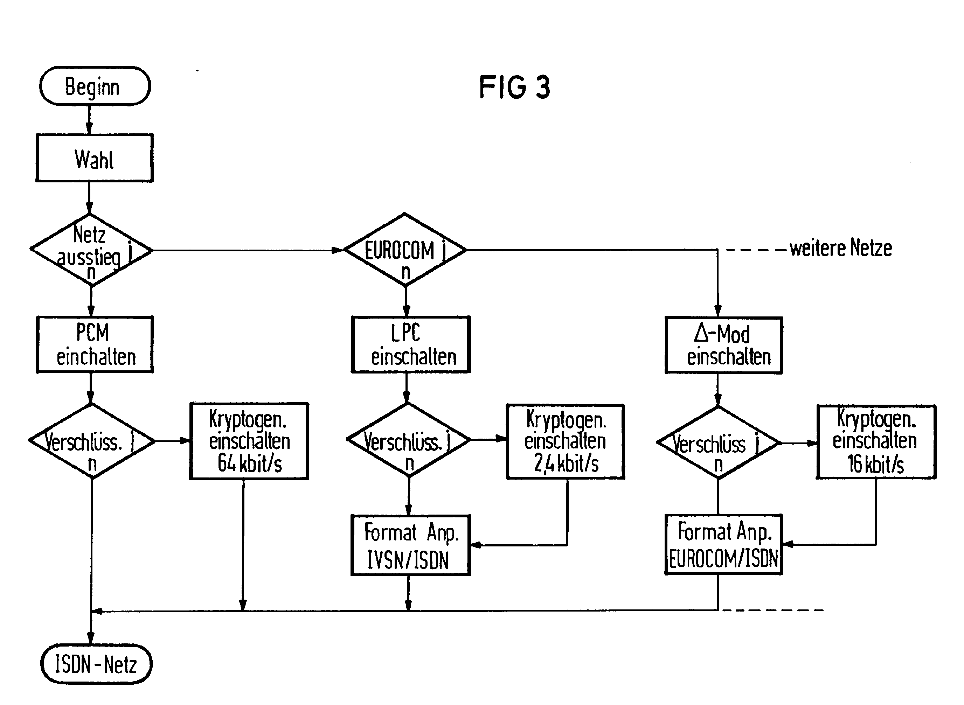

Ein solcher Verbindungsaufbau wird im folgenden anhand von Fig. 3 beschrieben.

Zu Beginn wird üblicherweise der Hörer abgenommen und zum Verbindungsaufbau von einem Teilnehmer im ersten Netz N1 mit dem gerufenen Teilnehmer eine Nummer gewählt. Diese Wahl beinhaltet bei einem außerhalb des Netzes befindlichen Teilnehmer einen Netzausstieg.

Wenn die Wahl keinen Netzausstieg (Netzausstieg n) beinhaltet, wird die mit Pulscodemodulation arbeitende Sprachaufbereitungseinrichtung 1, 2 eingeschaltet, wahlweise der Kryptogenerator 4 zugeschaltet, und das Gespräch zwischen den Teilnehmern durchgeführt.

Wenn die Wahl einen Netzausstieg (Netzausstieg j) beinhaltet, wird in einem Fall über die Überleitstelle Ü1 zum zweiten Netz N2 (Eurocom-Netz) die Verbindung zum dortigen Teilnehmer hergestellt (Eurocom j). Im Teilnehmerendgerät Tn1 wird die mit Deltamodulation arbeitende Sprachaufbereitungseinrichtung 8 eingeschaltet, wahlweise der Kryptogenerator 4 (angepaßt an 16 bit/sec)zugeschaltet, und die Formatanpaßeinrichtung 10 Eurocom/ ISDN aktiviert. Wenn die Wahl einen Netzausstieg zum dritten Netz N3 (Eurocom n) beinhaltet (über die zweite Übergangsstelle Ü2), so wird im Teilnehmerendgerät Tn1 zur Sprachaufbereitung der LPC-Vocoder 5 eingeschaltet, bedarfsweise der Kryptogenerator 4 (angepaßt an 2,4 kbit/sec) zugeschaltet und die Formatanpaßeinrichtung IVSN/ISDN aktiviert.

Erfindungsgemäß werden also im ersten Netz N1 sowohl ganz normale gemäß ISDN-Netz digitalisierte und formatierte Sprachsignale (Klartext oder verschlüsselter Text) übertragen. Weiter werden in diesem ISDN-Netz aber auch sogenannte Pseudo-ISDN-Nachrichten übertragen. Es handelt sich hierbei um die mit einem Vocoder oder gemäß dem Deltamodulationsverfahren aufbereitete analoge Sprachsignale, die über die Datenanpaßeinrichtungen 7, 10 auf das ISDN-Format gebracht wurden und wie normale ISDN-Signale im ersten Netz 1 übertragen werden.

Auf den Verbindungsaufbau zwischen einem rufenden Teilnehmer in einem der Netze N2, N3, und einem gerufenen Teilnehmer im ersten Netz N1 wird später noch eingegangen.

In Fig. 4 ist als Blockschaltbild die Übergangsstelle Ü1 dargestellt. Sie enthält an der zum ersten Netz N1 weisenden Seite eine Leitungsanschlußeinrichtung 11 gemäß dem ISDN-Format, an der zum zweiten Netz N2 weisenden Seite eine Leitungsanschluß einrichtung 12 gemäß dem Eurocom-Format. Erfindungsgemäß sind eine Datenformatanpaßeinrichtung 13 zur Umsetzung dieser beiden Datenformate, und ein Signalisierungsumsetzer 14 zur Umsetzung der Signalisierung (Rufnummer, Besetzt- und Freizeichen, usw.) dazwischengeschaltet.

Weiter ist in der Übergangsstelle Ü1 eine Quellennetzkennzeichnungseinrichtung 15 vorgesehen. In dieser Quellen etzkennzeichnungseinrichtung 15 wird bei einer Signalisierung aus dem zweiten Netz N2 an die normale Rufnummer (der gerufene Teilnehmer sitzt hierbei im ersten Netz N1) eine Quellennetzkennzeichnung angehängt. Durch dieses Quellennetzkennzeichen wird im Teilnehmerendgerät Tn1 des gerufenen Teilnehmers der den zweiten Netz N2 entsprechende Sprachaufbereitungs- und Formatierungsweg (8, 9, 10) eingeschaltet.

In Fig. 5 ist die zweite Übergangsstelle Ü2 dargestellt. Sie enthält auf der zum ersten Netz N1 weisenden Seite eine Leitungsanschlußeinrichtung 21 gemäß dem ISDN-Format, und an der zum ananlogen dritten Netz N3 weisenden Seite eine Leitungsanschlußeinrichtung 22 gemäß dem IVSN-Format.

Zur unverschlüsselten Sprachübertragung ist zwischen diese beiden Leitungsanschlußeinrichtungen 21, 22 ein PCM-Codec 23 (Coder-Decoder) geschaltet. Analoge Sprachsignale aus dem dritten Netz N3 werden in dem PCM-Codec 23 mit dem Pulscodemodulationsverfahren digitalisiert, und digitale Sprachsignale aus dem ersten Netz N1 werden in das analoge Sprachsignal übergeführt.

Wie schon anhand von Fig. 1 erläutert, können in dem analogen Netz N3 auch digitale Sprachsignale, insbesondere verschlüsselte, dititale Sprachsignale übertragen werden. Hierzu ist erfindungsgemäß zwischen die beiden Leitungsanschlußeinrichtungen 21, 22 eine Datenformatanpaßeinrichtung 24, ein Signalisierungsumsetzer 25, und diesen beiden nachgeschaltet ein Modem 27 eingefügt. Hierbei wird in der Datenformatanpaßeinrichtung 24 zusammen mit dem Modem 27 die Umsetzung der digitalen Sprachsignale des ersten Netzes N1 und des dritten Netzes N3 durchgeführt. Der Signalisierungsumsetzer 25 dient ebenfalls zusammen mit dem Modem 27 zur Umsetzung der im ersten Netz N1 und im dritten Netz N3 verwendeten Signalisierung.

Weiter ist auch hier eine Quellennetzkennzeichnungseinrichtung 26 vorgesehen, über die bei einem Ruf aus dem dritten Netz N3 (der gerufene Teilnehmer sitzt im ersten Netz N1) an diese Rufnummer ein Quellennetzkennzeichen anhängt wird. Aufgrund dieses Quellenetzkennzeichens wird im Teilnehmerendgerät der dem dritten Netz N3 entsprechende Sprachaufbereitungs- und Formatierungsweg (5, 6, 7) angeschaltet.

Anhand von Fig. 6 wird beschrieben, wie in der Datenformatanpaßeinrichtung 7 des Teilnehmerendgerätes Tn1, Fig. 2 (bzw. in der Datenformatierungseinrichtung 13 in der Übergangsstelle Ü1, Fig. 4) die Umsetzung eines deltamodulierten Sprachsignals in ein PCM-moduliertes Sprachsignal, und von diesem zurück in ein deltamoduliertes Sprachsignal durchgeführt wird. Hierzu wird das deltamodulierte Sprachsignal mit dem PCM-Abtasttakt abgetastet, und ein sogenanntes Pseudo-PCM-Signal gebildet. In der Leitungsanschlußeinrichtung 3 des Teilnehmerendgerätes Tn1 (bzw. in der Leitungsanschlußeinrichtung 11 in der Übergangsstelle Ü1, Fig. 4) wird dieses Pseudo-PCM-Signal genauso behandelt und formatiert wie ein übliches PCM-Sprachsignal.

In der Datenformatanpaßeinrichtung 13 der Übergangsstelle Ü1, Fig. 4 (bzw. in der Datenformatanpaßeinrichtung 7 des Teilnehmerendgerätes Tn1, Fig. 2) wird dieses Pseudo-PCM-Signal mit dem dem Deltamodulationsverfahren entsprechenden Abtasttakt abgetastet, und das deltamodulierte Signal, wie in der Zeichnung zu sehen ist, zeitversetzt zurückgewonnen. Dieses deltamodulierte Signal wird dann über die Leitungsanschlußeinrichtung 12 an das zweite Netz N2 (bzw. an die Teilnehmeranschlußeinrichtung 6, Fig. 2) abgegeben.

Der gleiche Vorgang, Umsetzung des deltamodulierten Signals in ein Pseudo-PCM-Signal bzw. die Rückgewinnung des deltamodulierten Signals, wird in der Datenformatanpaßeinrichtung 13 der Übergangsstelle Ü1 durchgeführt, wenn das digitale Sprachsignal aus dem zweiten Netz N2 in das erste Netz N1 überführt wird.

Analog werden die Umsetzungen in der zweiten Übergangsstelle Ü2 bzw. in dem dem dritten Netz N3 entsprechenden Signalaufbereitungsweg des Teilnehmerendgerätes durchgeführt.

## Patentansprüche

1. Nachrichtenübertragungssystem
mit einem ersten Teilnehmernetz (N1), bei dem die Teilnehmerendgeräte (Tn11, Tn12 ...) eine die Pulsscodemodulation verwendende Sprachaufbereitungseinrichtung (1, 2) aufweisen,
mit mindestens einem weiteren Teilnehmernetz (N2, N3), bei dem die Teilnehmerendgeräte Sprachaufbereitungseinrichtungen aufweisen und in dem die Übertragungsbitrate nicht größer ist als die im ersten Teilnehmernetz (N1),
mit mindestens einer die Netze (N1 bis N3) verbindenden Übergangsstelle (Ü1, Ü2) mit Signalisierungsumsetzer,
mit vorbestimmten Teilnehmerendgeräten (Tn1) des ersten Teilnehmernetzes (N1), die jeweils zusätzlich eine Sprachaufbereitungseinrichtung (6, 9) gemäß den weiteren Teilnehmernetzen (N2, N3) aufweisen,
**dadurch gekennzeichnet,**
daß die Teilnehmerendgeräte (Tn1) den zusätzlichen Sprachaufbereitungseinrichtungen (5,6,8,9) nachgeschaltete Datenformatanpaßeinrichtungen (7, 10) aufweisen,
daß die Übergangsstellen (Ü1, Ü2) Datenformatanpaßeinrichtungen (13, 24) aufweisen,
daß die Übergangstellen (Ü2, Ü3) jeweils eine Quellennetzkennzeichnungseinrichtung (15, 26) aufweisen, mit der an die Rufnummer aus dem weiteren Teilnehmernetz (N2) ein Quellennetzkennzeichen angefügt wird, über das im Teilnehmerendgerät (Tn1) des ersten Netzes (N1) eine der zusätzlichen Sprachaufbereitungs- und Datenformatanpaßeinrichtungen (5, 8, 6, 9, 7, 10) eingeschaltet wird.

2. Nachrichtenübertragungssystem nach Anspruch 1,
**dadurch gekennzeichnet,**
daß bei der Sprachaufbereitungseinrichtung eines der weiteren Teilnehmernetze die Deltamodulation verwendet ist.

3. Nachrichtenübertragungssystem nach Anspruch 1,
**dadurch gekennzeichnet,**
daß das weitere Netz ein analoges Netz (N3) ist,
daß die Teilnehmerendgeräte (Tn1) des ersten Netzes (N1) zusätzlich einen einschaltbaren Vocoder (5) zur Sprachdigitalisierung und eine Datenformatanpaßeinrichtung (7) aufweisen,
zumindest eines der Teilnehmerendgeräte im analogen Netz einen einschaltbaren Vocoder aufweist,
daß die Übergangsstelle (Ü2) ein Modem (27), eine Datenformatanpaßeinrichtung (24) und eine Quellennetzkennzeichnungseinrichtung (26) aufweist, mit der an die Rufnummer aus dem analogen Teilnehmernetz (N3) ein Quellennetzkennzeichen angefügt wird, über das im Teilnehmerendgerät (Tn1) des ersten Netzes (N1) die zusätzliche Sprachaufbereitungs- und Daten- formatanpaßeinrichtung (5, 6, 7) eingeschaltet wird.

4. Nachrichtenübertragungssystem gemäß einem der Ansprüche 1 bis 3,
**dadurch gekennzeichnet,**
daß in vorbestimmten Teilnehmerendgeräten der verbundenen Teilnehmernetze (N1, N2, N3) jeweils ein Kryptogenerator vorgesehen ist,
daß der Kryptogenerator (4) in den Teilnehmerendgeräten (Tn1) des ersten Netzes (N1) in seiner Bitrate an die verschiedenen Bitraten der Sprachaufbereitungseinrichtungen(1, 2, 5, 6, 8, 9) anpaßbar ausgebildet und diesen direkt nachgeschaltet ist.

5. Übergangsstelle (Ü1) für ein netzübergreifendes Nachrich- tenübertragungssystem nach einem der Ansprüche 1 bis 4,
**dadurch gekennzeichnet,**
daß eine Datenformatanpaßeinrichtung (13) vorgesehen ist,
daß eine Quellennetzkennzeichnungseinrichtung (15) vorgesehen ist, mit der an die Rufnummer aus einem untergeordneten (weiteren) Netz ein Quellennetzkennzeichen angefügt wird,
über das im Teilnehmerendgerät (Tn1) des ersten Netzes (N1) eine der zusätzlichen Sprachaufbereitungs- und Datenformatanpaßeinrichtungen (5, 8, 6, 9, 7, 10) eingeschaltet wird.

6. Übergangsstelle (Ü2) für ein netzübergreifendes Nachrichtenübertragungssystem nach einem der Ansprüche 1 bis 4,
**dadurch gekennzeichnet,**
daß eine Datenformatanpaßeinrichtung (24) und ein Modem (27) zur digitalen Signalübertragung in einem analogen Netz (N3) vorgesehen sind,
daß eine Quellennetzkennzeichnungseinrichtung (26) vorgesehen ist, mit der an die Rufnummer aus dem analogen Netz (N3) ein Quellennetzkennzeichen angefügt wird, über das im Teilnehmer- endgerät (Tn1) des ersten Netzes (N1) eine der zusätzlichen Sprachaufbereitungs- und Datenformatanpaßeinrichtungen (5, 8, 6, 9, 7, 10) eingeschaltet wird.

7. Übergangsstelle (Ü2) nach Anspruch 6,
**dadurch gekennzeichnet,**
daß ein PCM-Codec zur Digitalisierung bzw. Analogisierung der analogen bzw. digitalen Signale vorgesehen ist.

## Claims

1. Communication system, having a first subscriber network (N1) in which the subscriber terminals (Tn11, Tn12 ...) have a voice processing device (1, 2) employing pulse code modulation, having at least one further subscriber network (N2, N3) in which the subscriber terminals have voice processing devices and in which the bit transmission rate is not greater than that in the first subscriber network (N1), having at least one interface (Ü1, Ü2) with signaling converter connecting the networks (N1 to N3), having predetermined subscriber terminals (Tn1) of the first subscriber network (N1), which additionally have a voice processing device (6, 9) in accordance with the further subscriber networks (N2, N3) in each case, characterized in that the subscriber terminals (Tn1) have data format adaptation devices (7, 10) connected downstream of the additional voice processing devices (5, 6, 8, 9), in that the interfaces (Ü1, Ü2) have data format adaptation devices (13, 24), in that the interfaces (Ü2, Ü3) have in each case a source network identification device (15, 26) with which a source network identifier is appended to the call number from the further subscriber network (N2), by means of which one of the additional voice processing and data format adaptation devices (5, 8, 6, 9, 7, 10) is switched on in the subscriber terminal (Tn1) of the first network (N1).

2. Communication system according to claim 1, characterized in that delta modulation is employed in the voice processing device of one of the further subscriber networks.

3. Communication system according to claim 1, characterized in that the further network is an analog network (N3), in that the subscriber terminals (Tn1) of the first network additionally have a vocoder (5) that can be switched on for voice digitization and a data format adaptation device (7), at least one of the subscriber terminals in the analog network has a vocoder that can be switched on, in that the interface (Ü2) has a modem (27), a data format adaptation device (24) and a source network identification device (26) with which a source network identifier is appended to the call number from the analog subscriber network (N3), by means of which the additional voice processing and data format adaptation device (5, 6, 7) is switched on in the subscriber terminal (Tn1) of the first network (N1).

4. Communication system according to one of claims 1 to 3, characterized in that a cryptogenerator is provided in each case in predetermined subscriber terminals of the connected subscriber networks (N1, N2, N3), in that the cryptogenerator (4) in the subscriber terminals (Tn1) of the first network (N1) is designed so that its bit rate can be matched to the different bit rates of the voice processing devices (1, 2, 5, 6, 8, 9) and is connected directly downstream thereof.

5. Interface (Ü1) for a trans-network communication system according to one of claims 1 to 4, characterized in that a data format adaptation device (13) is provided; in that a source network identification device (15) is provided, with which a source network identifier is appended to the call number from a subordinate (further) network, by means of which one of the additional voice processing and data format adaptation devices (5, 8, 6, 9, 7, 10) is switched on in the subscriber terminal (Tn1) of the first network (N1).

6. Interface (Ü2) for a trans-network communication system according to one of claims 1 to 4, characterized in that a data format adaptation device (24) and a modem (27) are provided for digital signal transmission in an analog network (N3), in that a source network identification device (26) is provided, with which a source network identifier is appended to the call number from the analog network (N3), by means of which one of the additional voice processing and data format adaptation devices (5, 8, 6, 9, 7, 10) is switched on in the subscriber terminal (Tn1) of the first network (N1).

7. Interface (Ü2) according to claim 6, characterized in that a PCM codec is provided for digitizing the analog signals and for converting digital signals into analog ones.

## Revendications

1. Système de transmission d'informations, comportant
un premier réseau d'abonnés (N1), dans lequel les terminaux d'abonnés (Tn11, Tn12...) comportent un dispositif (1,2) de préparation de signaux vocaux utilisant la modulation par impulsions codées,
au moins un autre réseau d'abonnés (N2,N3), dans lequel les terminaux d'abonnés comportent des dispositifs de préparation de signaux vocaux et dans lequel la cadence binaire de transmission n'est pas supérieure à celle du premier réseau d'abonné (N1),
au moins un point de jonction (Ü1, Ü2) reliant les réseaux (N1 à N3) et comportant des convertisseurs de signalisation,
des terminaux d'abonnés prédéterminés (Tn1) du premier réseau d'abonnés (N1), qui comportent chacun, en outre, un dispositif (6,9) de préparation de signaux vocaux comme les autres réseaux d'abonnés (N2,N3),
caractérisé par le fait
que les terminaux d'abonnés (Tn1) comportent des dispositifs (7,10) d'adaptation des formats de données, qui sont branchés en aval des dispositifs supplémentaires (5,6,8,9) de préparation de signaux vocaux,
que les points de jonction (Ü1, Ü2) comportent des dispositifs (13,24) d'adaptation des formats de données,
que les points de jonction (Ü2, Ü3) possèdent chacun un dispositif (15,26) de caractérisation d'un réseau d'origine, au moyen duquel au numéro d'appel provenant de l'autre réseau d'abonné (N2) est adjoint un signal caractéristique du réseau d'origine, au moyen duquel l'un des dispositifs supplémentaires (5,8,6,9,7,10) de préparation de signaux vocaux et d'adaptation des formats de données est branché dans le terminal d'abonné (Tn1) du premier réseau (N1).

2. Système de transmission de données suivant la revendication 1, caractérisé par le fait qu'on utilise la modulation delta dans le dispositif de préparation de signaux vocaux de l'un des autres réseaux d'abonnés.

3. Système de transmission de données suivant la revendication 1, caractérisé par le fait
que l'autre réseau est un réseau analogique (23),
que les terminaux d'abonnés (Tn1) du premier réseau (N1) comportent, en supplément, un vocodeur (5), pouvant être branché et qui sert à numériser les signaux vocaux et un dispositif (7) d'adaptation des formats de données, et au moins l'un des terminaux d'abonnés dans le réseau analogique possède un vocodeur pouvant être branché,
que le point de jonction (Ü2) comporte un modem (27), un dispositif (24) d'adaptation des formats de données et un dispositif (26) de caractérisation du réseau d'origine, au moyen duquel au numéro d'appel provenant du réseau analogique d'abonnés (N3) est adjoint un signal caractéristique du réseau d'origine, au moyen duquel le dispositif supplémentaire (5,6,7) de préparation de signaux vocaux et d'adaptation des formats de données est branché dans le terminal d'abonné (Tn1) du premier réseau (N1).

4. Système de transmission de données suivant l'une des revendications 1 à 3, caractérisé par le fait
qu'un générateur de codes est prévu respectivement dans des terminaux d'abonnés prédéterminés des réseaux réunis d'abonnés (N1,N2,N3),
que la cadence binaire du générateur de codes (4) situé dans les terminaux d'abonnés (Tn1) du premier réseau (N1) est agencée de manière à être adaptable aux différentes cadences binaires des dispositifs (1,2,5,6,8,9) de préparation de signaux vocaux et est branchée directement en aval de ces dispositifs.

5. Point de jonction (Ü1) pour un système de transmission d'informations, qui s'étend au réseau, selon l'une des revendications 1 à 4, caractérisé par le fait
qu'il est prévu un dispositif (13) d'adaptation des formats de données,
qu'il est prévu un dispositif (15) de caractérisation d'un réseau d'origine, au moyen duquel au numéro d'appel provenant d'un (autre) réseau de rang inférieur est adjoint un signal caractéristique du réseau d'origine, au moyen duquel l'un des dispositifs supplémentaires (5,8,6,9,7,10) de préparation des signaux vocaux et d'adaptation des formats de données est branché dans le terminal d'abonnés (Tn1) du premier réseau (N1).

6. Point de jonction (Ü2) pour un système de transmission d'informations qui s'étend au réseau, suivant l'une des revendications 1 à 4, caractérisé par le fait
qu'il est prévu un dispositif (24) d'adaptation des formats de données et un modem (27) pour la transmission numérique de signaux dans un réseau analogique (N3),
qu'il est prévu un dispositif (26) de caractérisation du réseau d'origine, au moyen duquel au numéro d'appel provenant du réseau analogique (N3) est adjoint un signal caractéristique du réseau d'origine, au moyen duquel l'un des dispositifs supplémentaires (5,8,6,9,7,10) de préparation des signaux vocaux et d'adaptation des formats de données est branché dans le terminal d'abonnés (Tn1) du premier réseau (N1).

7. Point de jonction (Ü2) suivant la revendication 6, caractérisé par le fait qu'il est prévu un codeur/décodeur MIC servant à numériser les signaux analogiques et à rendre analogiques les signaux numériques.
